# EUROPEAN PATENT APPLICATION

(11) **EP 0 915 585 A1**
(43) Date of publication of application: **12.05.1999**
(21) Application number: 97908600.6
(22) Date of filing: 26.02.1997
(51) Int. Cl.: H04K 1/00

(54) **METHOD OF TRANSMITTING AND RECEIVING DATA**

(30) Priority: 27.02.1996 RU 96103854
(71) Applicant: Bryzgalov, Alexandr Petrovich, Moscow, 121609 (RU); Volkov, Pavel Vladimirovich, Moscow, 103064 (RU)
(72) Inventor: Bryzgalov, Alexandr Petrovich, Moscow, 121609 (RU); Volkov, Pavel Vladimirovich, Moscow, 103064 (RU)
(74) Representative: Mittler, Enrico
(86) International application number: RU9700046
(87) International publication number: WO9732414

(57) **Abstract**

The aim is to improve information transmission and reception characteristics by significantly increasing the bandwidth of the transmitted signal. To that end, an auto-correlation processing method is applied, i.e. a reference signal for transmission, which is formed and emitted in the transmitter at the same time as an information signal which has been modulated with the message signal to be transmitted, is used in the receiver for correlation processing. A novelty of the proposed process is the use as the carrier signal of a wide-band signal whose spectrum width can approach the minimum frequency of that spectrum, while the information and reference signals based on the carrier signal have a defined relative difference either in terms of overlap of time or frequency or both, they are not separated by time or frequency, the auto-correlation processing being carried out on reception without preliminary separation of the two transmitted signals.

## Description

Proposed is a method for the transmission and reception of information for use in communication, navigation, remote control etc, and utilizes a carrier signal which consists of a wide band signal.

Information transfer prefers that a communication channel be robust regardless of the propagation conditions and interference from various sources, permits the transfer of a number of different messages simultaneously, possesses sufficient passband and information transfer speed, is not a source of interference to other radio systems including other similar channels of communication and possibly could be hidden from unauthorized detection of the transmission and consequent reading of the transmitted message and so forth. To achieve these goals many techniques are employed.

When digital methods of information transfer are applied, the message is coded, this in many cases permits not only the detection of errors in the transmission, but also the means to remove them ["Sistemy electrosvjazi" (Systems of communications), V. P. Shuvalov 1987, radio i svjaz (radio and communications), M]. However these methods may not be sufficiently resistant to interference and changes to the propagation conditions, they require the use of complex devices and as such there are theoretical, technical and financial limitations on the development and practical applications for equipment requiring such high reliability. Also such systems cannot conceal the presence of the transmission and so do not provide security, furthermore they can create quite a high level of disturbance towards other radio systems over the range of transmitting frequencies.

Superior noise (interference) immunity can be achieved by the use of complex signals with a large factor of compression Kc for the carrying of the message. The increase of Kc is usually achieved by expanding the spectrum of the carrier signal forming a wide-band signal which also forms the basis for a wide-band reference signal, which is then simultaneously used for the coordinated cross-correlation processing of the wide-band information signal at the receiver [see, for example, "Sistemy svjazi s shumopodobnymi signalami (Communication systems with noise-like signals)" , L. E. Varakin 1985, radio i svjaz, M]. Thus, due to the reduced spectral density of this signal, there is a reduction in the interference to other radio systems that have a partial or even complete overlap of spectrum and also of the potential for unauthorized interception.

However there are restrictions on very wide-band carrier signals, these are mostly connected to the increase in technical problems experienced by attempts to increase the factor of compression Kc over certain limits.

These days there exist techniques which permit an increase of Kc to a limited extent. The traditional methods of coordinated processing by applying multi-channel methods for example, permit an increase in Kc, but they, nevertheless, still encounter significant technical difficulties. There is a further approach that permits a radical simplification of the technical problems, but, in return, results in significant power losses. This approach replaces inter-correlation processing of the received information, in which the received signal is compared with a locally generated reference signal in the receiver and instead applies an auto correlation processing for which only the received signal is required.

Changing to an auto correlation processing requires that in the transmitter simultaneously with the transfer of the message into a useful form, carry out the expansion of the spectrum of this message signal using a reference signal. Both signals, being received separately, for example due to the difference in their frequency spectrum, are used for the auto correlation processing [see, for example, " Spread Spectrum Communications Handbook " Marvin K. Simon... New York, McGraw - Hill, 1994 p. 7 and pic.1.2 - and p. 8]. Also in this book there is an example with the Spilker patent [J. J. Spilker, Jr., " Nonperiodic energy communication system capable of operating at low signal - to - noise ratios", U.S. Patent 3 638 121, Jan 25, 1972 (filed Dec. 20, 1960)], see also pages 115... 117.

The present invention relates to a method using a transmitted reference as described in the book by Robert. C. Dixon (Spread Spectrum Systems 1976).

According to this method two signals are formed: a message signal on frequency fc1 is obtained, for example, by modulation of a generated signal by the message signal, and a signal from another generator on frequency fc2. Simultaneously a wide-band carrier signal is formed, for example, as a signal based on a pseudo-noise sequence. Then by multiplication (balance modulation) of the carrier signal with the message signal and simultaneous multiplication of the carrier signal with the signal on frequency fc2, accordingly, a wide-band information signal and a reference signal are formed. Both signals are combined, amplified and radiated. Upon reception, the radiated signal is transformed into an electrical one and is branched out into two signals which are amplified and filtered, one on the frequency and band of the information signal, the other on the frequency and band of the reference signal. Thus there is a division of the two transmitted signals by virtue of division of their respective spectrums. The filtered signals are multiplied, the result is then filtered and the message signal is obtained, from which, in turn, by demodulation the message is recovered.

Auto correlation processing methods, besides the above mentioned shortcoming of a poor signal to noise ratio as a result of the noise in the communication channel of the reference signal, also suffer from restrictions on the bandwidth of the carrier signal. These restrictions result from the technical difficulties in producing two wide-band signals which do not overlap by spectrum and by the expansion of the spectrum, consequently increasing the frequency separation between the information and reference signals is limited by the difficulty experienced in correlating these signals after their passage through the communication path and through the devices which is caused by differences in the frequency characteristics of the circuitry over the frequency bandwidth of the two transmitted signals.

A technical result of the present invention is to permit a significant (by degrees of order) increase in the bandwidth of the carrier signal and hence significant improvement in the resistance to interference in the channel of communication, its stability to changes of the spreading conditions, reduction of interference towards other radio systems, increase of security, increase of number of channels etc.

Essentially the present method is based in common with the above mentioned method wherein the following are employed:
∘ form a message signal by modulation of a signal from a basic generator with the message to be transmitted, generate a wide-band carrier signal which is then branched out into two components and by multiplication of one component with the message signal form an information signal for transmission and from the second component form a reference signal for transmission too,
∘ combine both of these signals, amplify and radiate,
∘ the radiated signal at the point of reception is transformed into an electrical signal and amplified,
∘ from this signal are formed two signals, which are then multiplied,
∘ after multiplication extract the message signal by use of the appropriate filter and from this demodulate and recover the message,
   wherein the present method:
∘ as a carrier signal use an ultra wide-band (super spread spectrum) signal whose bandwidth is significantly more than the bandwidth of the message signal and can approach the minimum frequency of its spectrum,
∘ the information and reference signals for transmission can overlap in both spectrum and time by use of a sub-carrier frequency fn for the message signal, and / or by the introduction of a delay in one component of the carrier signal after branching,
∘ upon reception the radiated signal is transformed into an electrical signal, filtered and amplified and then branching into two signals, if a signal was subject to a time delay in the transmission stage then delay one of the branched signals by the same amount and then multiply both signals, after multiplication use a filter with the frequency and bandwidth to recover the message signal.

The sub-carrier frequency fn and the delay are selected based on several conditions. fn must be greater than the bandwidth of the message signal. This condition arises, in particular, from the overlapping of the spectrum of the information and reference signals and by impossibility of division by frequency or other means at the reception point. Conversely, fn must not be greater than a frequency interval for which throughout the entire bandwidth is restrained to a region in which the amplitude - frequency characteristics remain relatively constant and frequency - phase relatively linear along the communication path, this being the path from transmission to reception - i.e. the path in which the signals pass from the moment they are formed until their processing (multiplication) at the receiver. Otherwise the information and reference signals may undergo de-correlation with the consequence of a loss of energy of the received signal and a distortion of the transmitted message. Likewise the delay period should not be less than the value of the inverse of the bandwidth of the carrier signal and should not be more than the interval during which the path remains stationary.

For practical purposes, in order to reduce the complexity of this invention, and also to render more difficult the possibility of an unauthorized reception through either prior knowledge or deduction of the parameters used to create the complex carrier signal, the carrier signal can also be formed from a continuous noise signal. Such a signal can be obtained by employing non-deterministic white noise passed through the appropriate band filter.

To avoid de-correlation of the reference and information signals, the communication path must be linear. Formerly this implies that amplitude restrictions on the reference and information signals are not recommended. However normally noise has rather large bursts, so the requirement that there be an absence of peak restrictions may reduce the average transmitted power overly much. Therefore, it is permissible to apply peak restrictions, even excessive ones, during the formation of a random noise carrier signal (but before the formation of the information and reference signals).

When it is necessary to send N messages simultaneously, for each message form a message signal. In order that these can be resolved in the receiver, when the message signals are being formed the sub-carrier frequencies should be separated by a value not less than the bandwidth of their corresponding narrow-band message signals. Further, split the carrier signal into N branches to form N components and multiply each of these with one of the message signals, for each message to be transmitted there is thus formed an individual information signal, these are then all combined together and the resulting information signal is obtained. This signal, as outlined before, is combined with the reference signal, amplified and radiated. On reception and after multiplication of the two signals, separation of each respective message signal can be achieved by employing the appropriate filters for the frequencies and band of each of these signals.

Also, to further increase the number of simultaneously transmitted messages, to form the individual information signals, besides using several sub-carrier frequencies it is also possible to add fixed delays to one or more of the signals formed after the branching of the carrier signal. These delays are chosen such that they are not less than the value of the inverse of the bandwidth of the carrier signal. By choosing for each message to be transmitted the parameters of sub-carrier frequency i and/or delay j, the respective individual information signals can be formed, by combining these we form the resulting information signal. Individual information signals employing different delays may have identical sub-carrier frequencies. On reception and following the branching of the received signal, which should first pass through a filter and an amplifier, into two signals and taking into consideration that one signal was subject to the delay process mentioned above, for each delay, as applied in the transmitter, delay one of the branched signals and carry out additional multiplication of this delayed signal with the other signal. After each multiplication, recover the message signal attributed to the particular delay by means of the appropriate filter.

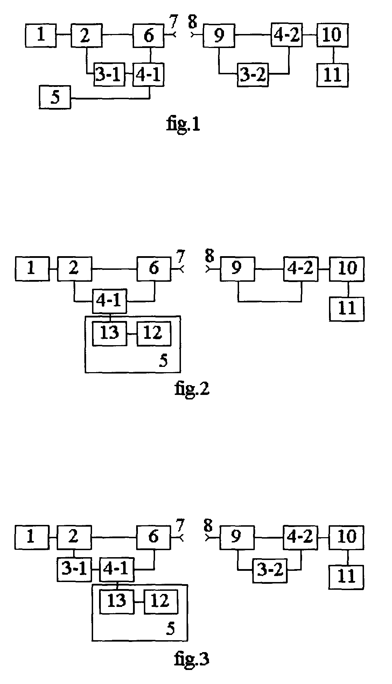

This essence of this method may be understood by reference to the accompanying drawings, block diagrams of which are shown in Fig 1...3.
Fig. 1 is a block diagram showing a generalized device employing a time delay as the parameter used to distinguish between the wide-band information and reference signals.
Fig. 2 is a block diagram showing a generalized device using frequency as the distinguishing parameter.
Fig. 3 is a block diagram showing an example of a generalized device employing both time delay and frequency as the parameters used to distinguish between the wide-band information and reference signals.

### Key:

- 1 -: carrier signal generator,
- 2 -: bifurcater,
- 3 -: delay path,
- 4 -: multiplier,
- 5 -: modulator (forms message signal),
- 6 -: signal combiner and amplifier,
- 7 -: radiating aerial,
- 8 -: reception aerial,
- 9 -: filter and amplifier,
- 10 -: bandpass filter,
- 11 -: demodulator (to recover message),
- 12 -: message input,
- 13 -: control signal generator.

To reduce the complexity of the drawings these figures show examples in which only one message signal is being transmitted.

Fig. 1 illustrates the use of a time delay, used to distinguish between the transmitted wide-band information and reference signals, introduced at the point of formation of one of these two signals. A wide-band carrier signal is formed from a generator 1, the spectral density in the band of this signal fc is preferred to be approximately constant, the bandwidth of fc is significantly more than the bandwidth of the message signal and can approach the minimum frequency fmin of its spectrum. For example, it is possible to choose as a bandwidth fc = 1.2GHz with fmin = 1GHz, or fc = 5GHz with fmin = 5GHz also. The band of the carrier signal influences the information transfer because its expansion results in an increase in the factor of compression, and this in turn, as was mentioned above, increases resistance to interference, improved security etc. A bifurcater 2 branches the signal from the output of 1 into two signals and may be hardwired into the circuit. A delay path 3 - 1, which can be hardwired onto one of these two branches, detains one of the signals from the output of 2 by time T. For example, if we choose a delay T which exceeds the value of the inverse of the bandwidth of the carrier signal generated at 1, T will approximate 2 nano-seconds.

In block 5 a message signal is formed from the message to be transmitted, the multiplier in block 4-1 multiplies this message signal with the signal from 3 - 1 to form a wide-band information signal which is then combined in block 6, composed of signal combiner and amplifier, with the second signal from 2, the wide-band reference signal, to form a signal with practically overlapping bands of information and reference signals. To achieve a desirable power ratio of information to reference signal and also for getting the best performance from the multiplier 4-2 in the reception device, in 6 the information and reference signals can receive different levels of amplification before they are combined. These levels can depend on many factors, such as the kind of signal generated at 1, the technical parameters of 4 - 1, number of messages to be transmitted, construction of block 4 - 2, required degree of security of the signal etc. To achieve the desired emission power in 6 the combined signal can then be amplified. Simultaneously, to reduce energy losses, interference to nearby radio systems etc., at the output of 4 - 1 and 6, band filtering for the required band of the transmitted signals is desirable. To reduce the dynamic range of signal values as preferred for input to 4 - 1 and 6, and also to increase the output power of the transmitter, in 1 the amplitude limiting of the signal, even a severe limiting, can be applied while still maintaining the signal integrity.

The signal to be received is then radiated by the aerial 7.

The delay path 3-1 can also be set in the reference signal path instead, i.e. between 2 and 6.

The signal radiated from aerial 7 is received at aerial 8 of the reception device and then passed through block 9 in which it is filtered and amplified. The task of this preliminary filter is to suppress external signals lying outside the band of the transmitted signal. It is especially important to reduce strong interference, removal of which, during the correlation processing, may be inadequate. The entrance circuits should produce as little noise as possible.

At the output of 9 are formed two signals, one of which, to compensate for the delay in 3-1 during the formation of the information signal,, passes through delay path 3 - 2 and is used as the transmitted information signal, while the signal from the second output of block 9 is used as the transmitted reference signal. Levels of both signals at the output of 9 are chosen so as to optimize operation of the multiplier 4 - 2 following from which the signal goes to bandpass filter 10, which is set to the central frequency of the message signal and coordinated with the band of this signal. If the message signal has no sub-carrier frequency then the band filter 10 can revert to a filter of low frequencies. However noise stability in this case may be lowered. From the exit of 10 the message signal is sent to 11 from which the message is recovered in the appropriate form for the user.

If simultaneous transfer of two or more messages is necessary then in 3 - 1 taps in every delay period can be used, as with the single message. In 5, for each message to be transmitted, the respective message signal is formed, and these signals can have the same sub-carrier frequencies. By increasing the number of multipliers 4 - 1, it is possible to multiply each of these signals with one of the outputs of 3 - 1. Individual information signals of separate messages formed by such multiplication are then combined to form the resulting information signal, which, as with the single message, is sent to 6.

By constructing delay path 3 - 2 in a similar fashion to 3 - 1 and by additional branching of the non-delayed signal from the output of 9 and by the corresponding duplication of 4 - 2, signals from different taps of 3 - 2 can be multiplied, and from 10 and 11 the transmitted information and message recovered.

From a technical point, construction of the above block diagram is not difficult. There are some practical restrictions on the band fc due to difficulties in the construction of ultra wide-band mixers, aerials, waveguides etc. However present and readily available devices permit the formation and processing of signals within an octave-wide or wider band. For the carrier signal a white noise generator can be made from transistors, noise diodes, various spark circuits etc. Except for shaping the carrier signal, 1 must contain some type of band filter, but there are no special requirements for this filter.

The multiplier 4 - 1 should be wide-band and linear and form signals with frequencies that are the sum and difference respectively of the input signal frequencies. A practical example of a multiplier is a double balanced mixer working in the linear mode by selecting a point of constant current and ensuring work of both inputs at small signals, the relative signal levels could be selected at the point of division in 2.

Fig. 2 illustrates the use of frequency to distinguish between the transmitted wideband information and reference signals. In this case, to reduce the required dynamic range for linear operation of the transmitter and receiver, for additional resistance to interference and to decrease the interference that occurs from the transmission of multiple messages, block 5, in which is formed the message signal, can be divided into two subsections. Firstly, in 12 the message is used to form a narrow-band signal which then modulates the signal from the control generator 13. The resulting modulated signal from 13 becomes the output signal of 5, (i.e. the message signal), which, as outlined in fig.1, is multiplied in 4 - 1 with the carrier signal from the output of the bifurcater 2.

If a simultaneous transmission of several messages is desired, increase the number of message signals simultaneously formed in 5, in addition, increase the number of branches from 2, and also increase the number of multipliers 4 - 1. Multiply each message signal from 5 with one of the carrier signals branching from 2 to form individual information signals, which, as well as in the previous example using a delay, then combine to form the information signal which is then sent to one of the inputs in 6.

While doing this the subcarrier frequencies of the message signals are chosen, not from conditions regarding the division of the spectra of the individual information signals, but from conditions regarding the division of the spectra of the message signals.

The option of simultaneous transmission of several message signals as outlined in fig.2 is somewhat more simple than the technique considered in fig.1, as for all the message signals only one multiplier 4 - 2 is required, and division of the message signals after multiplication is carried out by parallel installation of the appropriate number of bandpass filters 10, each one of which refers to its own message signal. From the output in 10 the signals are sent to 11 to be demodulated and the message recovered as required.

Fig. 3 illustrates the simultaneous use of both parameters, time and frequency, to distinguish the wide-band information from the wide-band reference signal. The carrier signal formed in 1 branches at 2 and the signal from one of the outputs of 2 is delayed at 3 - 1. The message signal, generated as outlined in fig. 2, is sent to one of the inputs of the multiplier 4 - 1, to the other input is sent the signal from 3 - 1. The signal from 4 - 1 is combined at 6 with the carrier signal directly from 2. The block diagram of the receiver is similar to that of fig. 1 but the interesting point is that although the signal is now coded with both parameters, time and frequency, the simplicity of the multi-channel parallel processing in the receiver as outlined in fig. 2 can be maintained for the simultaneous transmission of several messages. In this case, if several individual information signals were formed (in a group) using the same delay, at reception, for the group, only one delay is required, and filtration of the groups signals is carried out after the appropriate multiplier.

Thus utilizing the above methods, the reference signal can be transferred to the reception point of the communication path simultaneously with the information signal where the signal is then used for the correlation processing. The occurrence in the reference signal of interfering influences, including the information signal, would normally change the useful signal to noise ratio at the output of the correlator when compared with a correlator using a locally generated reference signal. But by fulfilling the above specified requirements, these losses can be considerably reduced, and under certain conditions, in particular, by restricting the minimal signal to noise ratio at the input of the correlator, the losses are maintained to within an acceptable level. And construction is technically simple when compared to existing radio-channels that have approximately similar characteristics, but with less interference resistance, security, stability regarding propagation conditions etc.

## Claims

1. The method for the transmission and reception of information consists of the following:
for transmission form a message signal by modulating the message to be transmitted, form a wide-band carrier signal, branch the carrier signal into two components and by multiplying one of the components with the message signal form an information signal for transmission and from the other component form a reference signal for transmission;
combine the generated information and reference signals, amplify and radiate;
at reception transform the received signal into an electrical signal, amplify and form two signals, multiply these and filter the result of this multiplication, extract the message signal, demodulate and recover the message;
with the following distinguishing features:
for said carrier signal, use a wide-band signal whose bandwidth can approach the minimum frequency of its spectrum;
for said information and reference signals, in order that they can overlap in terms of time and frequency, use a subcarrier frequency fn for the message signal and / or a time delay in one of the components of the carrier signal after branching;
for said subcarrier frequency fn, choose a frequency greater than the bandwidth of the message signal, but not more than a frequency interval of the emitted bandwidth for which throughout the communication path the amplitude - frequency characteristics are relatively constant and the frequency - phase characteristics relatively linear;
for said time delay, choose a delay not less than the value of the inverse of the bandwidth of the spectrum of the carrier signal, but not more than the interval during which the path remains stationary;
at reception and after filtering and amplifying, branch the received signal into two signals, if a delay was applied in the transmitter, then delay one of the signals by the same amount and after multiplication of the two signals filter the output on the frequency and band of the message signal.

2. The method as described in 1., in which as a carrier signal a continuous noise signal, for which there may be imposed limits on amplitude, with the required bandwidth, is used.

3. The method as described in 1. and 2., in which for the transmission of N messages form N message signals whose subcarrier frequencies are sufficiently separated such that their spectra do not overlap, carry out additional branching of the carrier signal for the purpose of multiplication with each of the message signals thus forming individual information signals, combine to form the resulting information signal for transmission, and at reception and after multiplication of the two signals carry out parallel filtration for all the message signals.

4. The method described in 3., in which for the formation of individual information signals, besides employing subcarrier frequencies, introduce fixed delays to one of the two components of the carrier signal after branching with the difference in delays not less than the value of the inverse of the bandwidth of the spectrum of the carrier signal, by allocating to each message to be transmitted its individual combination of subcarrier frequency i and / or delay j form individual information signals;
by combining these information signals form the resulting information signal for transmission and where the individual information signals have different delays the subcarrier frequencies of their message signals can be equal;
at reception and after branching of the received and filtered and amplified signal, for each delay as applied in the transmitter, delay one signal after branching by the same amount and multiply with other signal, and after each multiplication filter to recover the message signals.
